# EUROPEAN PATENT SPECIFICATION

(11) **EP 0 832 811 B1**
(45) Date of publication and mention of the grant of the patent: **08.07.1998**
(21) Application number: 96830488.1
(22) Date of filing: 30.09.1996
(51) Int. Cl.: B62J 1/00, B62J 1/16

(54) **Bicycle baby-seat**
Fahrradkindersitz
Siège de bébé pour bicyclette

(43) Date of publication of application: 01.04.1998
(73) Proprietor: STAMP S.r.l., I-24060 Telgate (Bergamo) (IT)
(72) Inventor: Erli, Pier Angelo, 24060 Telgate (Bergamo) (IT)
(74) Representative: Righetti, Giuseppe

(56) References cited:
- WO-A-96/22907
- DE-A- 4 325 965
- DE-C- 4 137 575
- DE-U- 9 012 792

## Description

The present invention relates to a bicycle baby-seat of the type described in the preamble of claim 1.

It is known that bicycle baby-seats comprise an anatomically-shaped supporting stricture capable of receiving and holding a child's body to the correct position. This supporting structure is generally made up of different portions that are suitably shaped and comprise at least one first portion defining the seating surface and one second portion defining a seat-back. Usually departing from said first portion is also a pair of extensions enabling holding of the legs and in addition performing a rest function for the feet, so that these parts of the child's body too can take a correct position on cycling.

Usually the whole supporting structure inclusive of the extensions for legs and feet, forms a single black obtained by molding of plastic material and said structure is fastened to the bicycle by appropriate attachment means holding it fast in a single position corresponding to a substantially vertical arrangement of the seat-back.

It is also known from document DE9012792U (D1) a bicycle baby seat made of a seat back hinged to a seating surface and capable of maintaining vertical and reclined settings of the seat back itself.

In order to change the configuration of the seat, the user has to recline the seat back and then to move the structure backward and forward along a slide in order to bring back the centre of gravity of the seat to its original position.

The baby-seat can be fastened to a bicycle frame either at a rear position, behind the rider's back, or at a front position both beyond the handlebar, so that said seat faces the bicycle rider, and between the wheels' axes so that the seat faces the road.

Baby-seats of known type briefly described above however have some limits greatly reducing use of same under some conditions.

First of all, they practically are to be used by children having already reached a sufficient development in terms of capability of holding an upright position, that is children in which the back muscles can bear the body weight. For this reason the use of bicycle baby-seats of known type is only suggested when the child's weight is at least as high as 9 kg. Therefore little babies of some months of age are excluded.

In addition, baby-seats built up in conformity with the known art are inappropriate, should childred seated therein fall asleep: actually in this case the child's head and bust have a tendency to lean forward and since the child is exclusively held by the safety belts, he/she will take a dangerous position which is also detrimental to the child's comfort.

It is to be added that any possible structural solution which is likely to be able to overcome the above mentioned limits must in any case take into account the steadiness and steerability requirement of a bicycle: the centre of gravity of the overall load is to be placed as much as possible in the middle between the two wheels' axes. Adding seat for carrying a baby who may reach 25 kg of weight brings about a displacement of the centre of gravity of the overall load which is to be held within acceptability limits. These acceptability limits are identified, in accordance with the regulations in force in some European countries, by the maximum distance (which is usually of 10 cm) between the vertical axis passing through the centre of gravity of the overall weight of a seat with a baby disposed therein and the pivot of the wheel closer to the seat. Practically, in order to keep the above distance between the seat and the pivot of the front or rear wheel (depending on the provided seat location) within appropriate limits, the known art only provides for fastening of said seat-back at a substantially upright position.

Under this situation, the technical task underlying the present invention is to provide a bicycle baby-seat capable of substantially obviating the above limits.

Within the scope of this technical task it is an important object of the invention to provide a bicycle baby-seat to be used also with babies of a few months of age and capable of carrying sleeping children as well in a quite safe and conveniently comfortable manner without any important position displacement of the centre of gravity of the overall load formed of the seat and a child sitting therein.

The technical task mentioned and the aim specified are substantially achieved by a bicycle baby-seat described in the characterizing portion of claim 1.

The description of some preferred embodiments of a bicycle baby-seat in accordance with the invention is now given hereinafter by way of non-limiting example with reference to the accompanying drawings, in which:
- Figs. 1 and 2 show a first embodiment of a seat located at a rear position, in an upright setting and a reclined setting, respectively;
Figs. 3 and 4 show a second embodiment of the seat still located at a rear position, in an upright setting and a reclined setting, respectively;
- Figs. 5 and 6 show a third embodiment of a seat, substantially similar to the first embodiment represented in Figs. 1 and 2, located at the front behind the bicycle handlebar, in an upright setting and a reclined setting respectively;
- Figs. 7 and 8 show a fourth embodiment of a seat substantially similar to the second embodiment represented in Figs. 3 and 4, located at the front before the bicycle handlebar, in an upright setting and a reclined setting respectively;
- Figs. 9 and 10 concern a fifth embodiment of a baby-seat in accordance with the invention, located at a rear position;
- Figs. 11 and 12 concern a sixth embodiment of a baby-seat still located at the rear.

With reference to the drawings, the bicycle baby-seat in accordance with the invention has been generally identified by reference numeral 1.

It comprises an anatomically-shaped supporting structure 2 having a first portion 3a defining a seating surface and a second portion 3b defining a seat-back. The first and second portions 3a and 3b can be for example integral with each other, thereby forming a substantially rigid unitary body 3 of concave form capable of holding and retaining the body of a child also at the sides.

The baby-seat further comprises attachment means 4 for connection to the frame 5 of a bicycle 6.

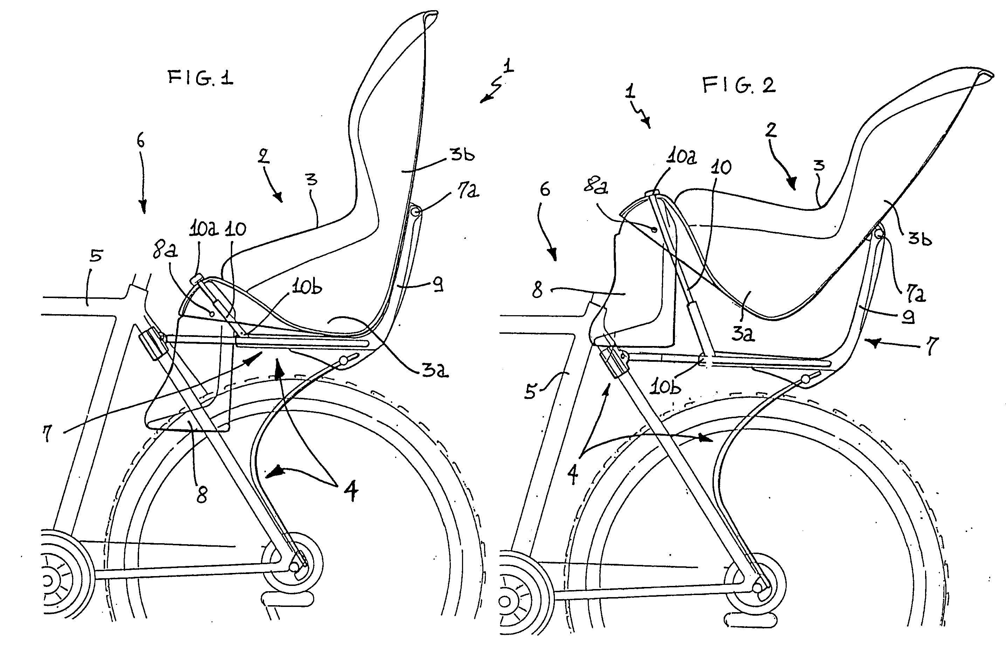

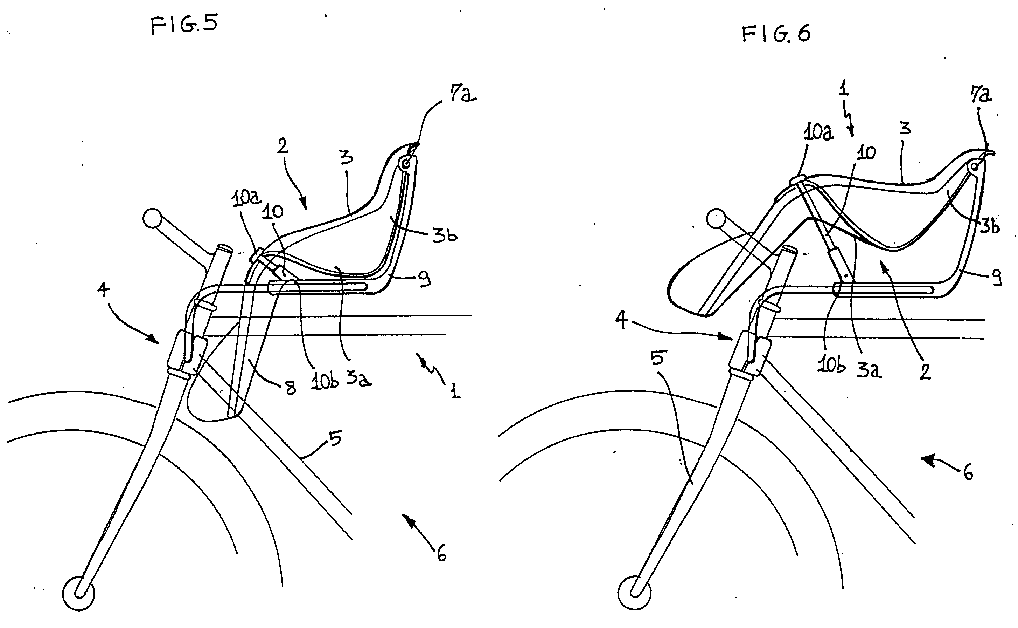

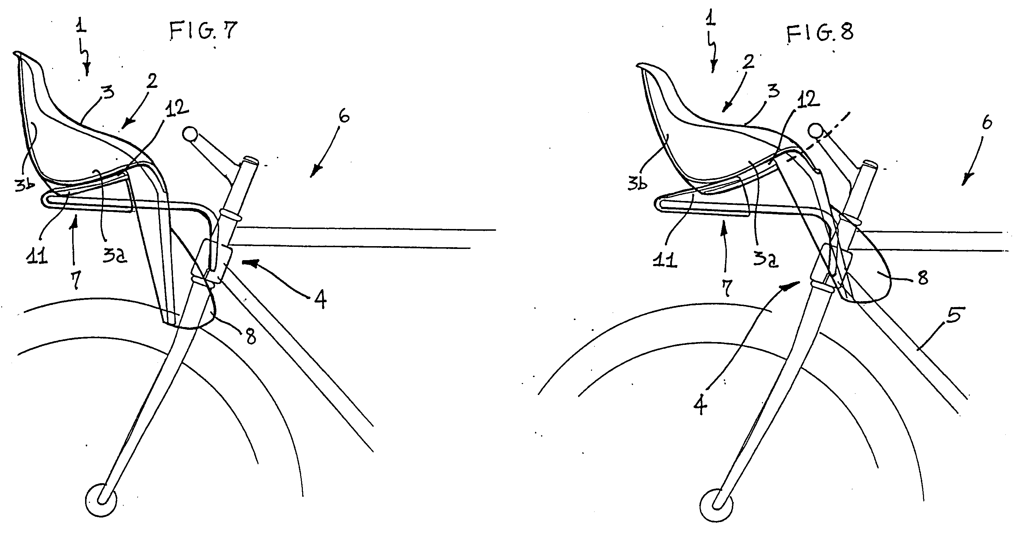

In an original manner, associated with the supporting structure 2 is adjustable support means 7 adapted to make the supporting structure 2 take at least two distinct operating settings, the first setting corresponding to a substantially upright (i.e. vertical) arrangement of the seat-back 3b (see Figs. 1, 3, 5, 7), and the second setting corresponding to a reclined (i.e. partially lowered) arrangement of said back (see Figs. 2, 4, 6, 8). Obviously, if the seating surface 3a is integrally connected to the seat-back 3b, said seating surface too undergoes a modification in its inclination on passing from one of the above mentioned operating settings to the other. Obviously two or more reclined positions may be provided for the seat-back 3b.

In more detail, it is to note that the adjustable support means 7 is operatively interposed between the attachment means 4 and the supporting structure 2.

The adjustable support means 7 in addition has the original feature of maintaining the position of the centre of gravity of the overall load weighing on the bicycle 6 (formed of the seat weight and the weight of the child seated therein) substantially unchanged, when the seat takes said differently-inclined settings.

When the seat 3 is substantially rigid, said adjustable support means 7, in order to accomplish the above mentioned condition of substantial inalterability of the centre-of-gravity position, defines a circular displacement path of the rigid seat 3 between said operating settings in which a centre of rotation 7a is disposed substantially close to the seat-back 3b, for example in the middle of the seat-back height when said back is of the high type (see Figs. 1, 2, 3, 4).

The supporting structure 2 further comprises a leg and foot rest portion 8 capable of maintaining these parts of a child's body too in a correct position.

In the first and second embodiment of the baby-seat 1, adapted to be mounted at the rear on a bicycle (see Figs. 1, 2, 3, 4), said leg and foot rest is advantageously rotatably engaged with the first portion 3a at a pivot pin 8a, so that it is maintained substantially disengaged from the rotations carried out by said first portion, thereby keeping an unchanged orientation during the different operating settings taken by the rigid seat body 3. Due to the pivot engagement of the leg and foot rest 8, arrangement of the seat-back 3b and seating surface 3b in the reclined setting prevents said leg and foot rest from projecting, which will give rise to possible interferences with the bicycle rider or with portions of the frame 5.

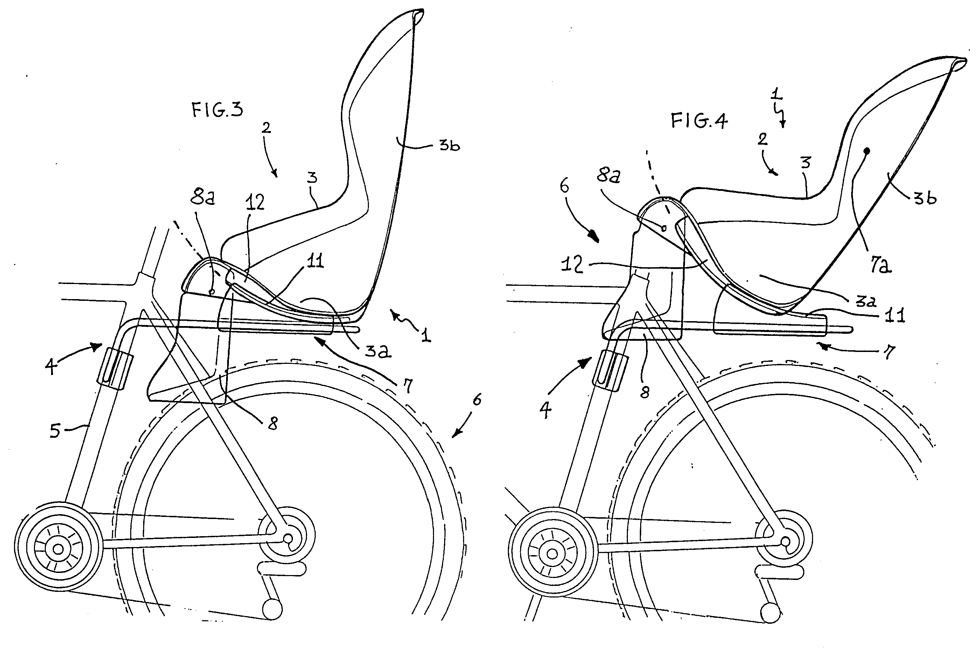

In the third and fourth embodiments of the baby-seat in which the latter is placed at the front, before or behind the bicycle handlebar (see Figs. 5, 6, 7, 8), the leg and foot rest is fixedly integral with the first portion 3a, being for example of one piece construction therewith, and therefore it follows the displacements of the rigid seat body 3 without giving rise to drawbacks, due to the specific location of the seat.

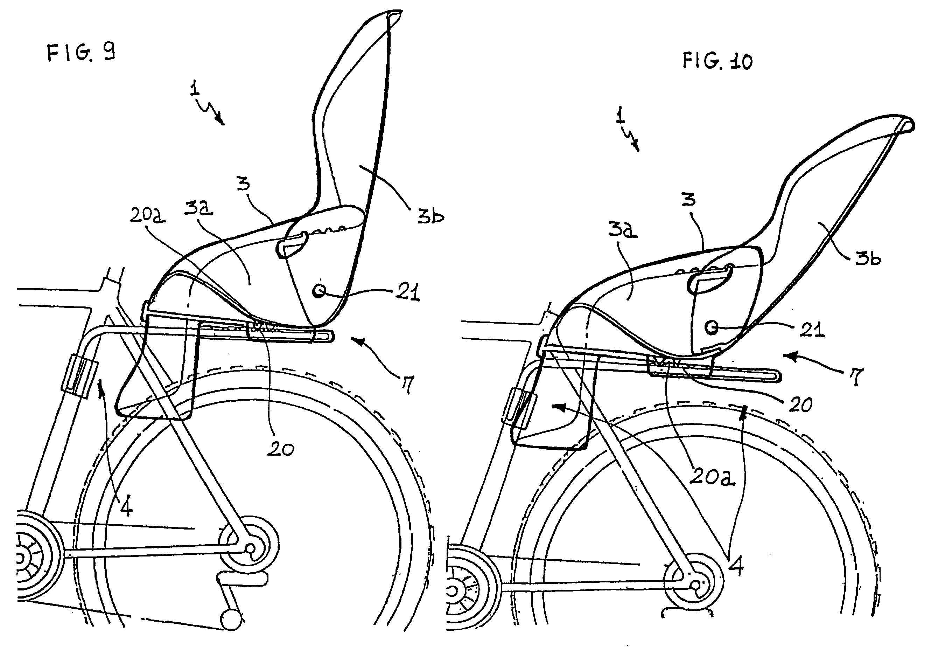

Alternatively, when the seat 3 is not made up of a unitary rigid body but it consists for example of a seat-back 3b articulated on the seating surface 3a (see Figs. 9 to 12), a horizontal slide 20 is also provided for moving the seat backward and forward in order not to alter the centre-of-gravity position. Practically, in this case, the adjustable support means 7 is defined by said slide 20 and by a hinge element 21 located between the first portion or seating surface 3a and the second portion or seat-back 3b.

In this case too, the whole path of the seat-back 3a, given by the combination of a rotatory motion about element 21 and a translation motion along slide 20, will be substantially a circular path. It is to note that slide 20 will be such shaped as to enable a plurality of different positionings to be taken, due to the presence of adjustment and lock means 20a.

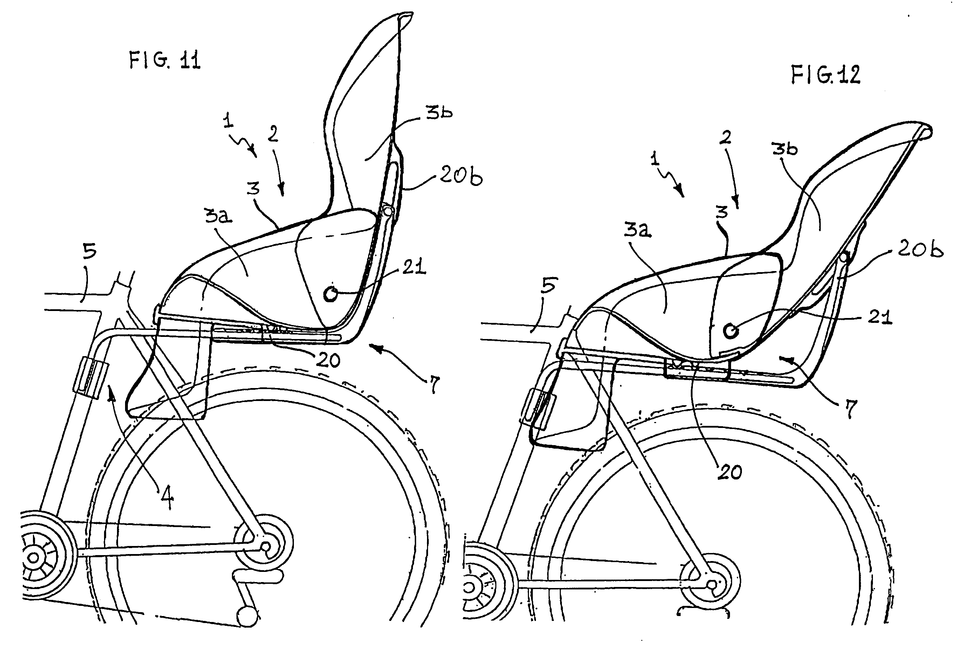

As regards the seat-back inclination, a multiposition connecting element 21a operatively interposed between the seating surface 3a and the seat-back 3b (see Figs. 9 and 10) or, alternatively, a slidable coupling portion 21b interposed between the attachment means 4 and the seat-back 3b (See Figs. 11 and 12) may be used.

In a first embodiment (see Figs. 1, 2, 5, 6) of the adjustable support means 7, said means comprises at least one substantially L-shaped rigid base element 9 the shape of which matches that of the outer surface of the rigid seat body 3 at least partly. The base element 9 is integral with the attachment means 4 and comprises one hinging end on which the seat-back 3b is articulated and which defines the centre of rotation 7a. At least one rod-like element 10 of variable and adjustable length is connected, at one end portion 10a thereof, with the first portion 3a of the rigid seat body 3, and is pivotally mounted, at a second end portion 10b thereof, to a second hinging end of the base element 9 at an opposite position relative to said centre of rotation 7a.

In a second embodiment (see Figs. 3, 4, 7, 8) of the adjustable support means 7, said means comprises at least one base guide 11 of curved conformation integral with the attachment means 4 and defining said circular displacement path of the rigid seat body 3. A counter-guide 12 or similar sliding member integral with the first portion 3a of the rigid seat body 3 slidably engages with the base guide 11 and enables oscillation of the rigid body 3 about the centre of rotation 7a.

Both in the first and second embodiments, the adjustable support means 7 comprises locking means of a conventional type, not shown in the drawing, adapted to lock the rigid body 3 to the desired operating setting.

Use of a bicycle baby-seat described above mainly as regards structure is as follows.

For children capable of holding themselves erect, the supporting structure 2 is fixed in such a manner that the seat-back 3b is in an upright position, thereby accomplishing a seat setting substantially corresponding to that of the seats of the known art (see Figs. 1, 3, 5, 7).

If the child seated in the baby-seat of the invention wishes to sleep or in any case to take a more relaxing posture, the rigid seat body 3 is fixed in such a manner that the seat-back has a reclined position (see Figs. 2, 4, 6, 8). The last mentioned setting is always indispensable when very tiny babies of few months of age are concerned.

It is pointed out that rotation of the rigid seat body 3 about an axis disposed close to the seat-back enables the centre-of-gravity position of the load made up of the seat itself and a child seated therein to be maintained substantially unchanged, thereby avoiding variations in the bicycle steadiness on cycling and consequent worsening of the bicycle steerability.

## Claims

1. A bicycle baby-seat of the type comprising :
- an anatomically-shaped supporting structure (2) having at least one first portion defining a seating surface (3a) and one second portion defining a seat-back (3b), and
- attachment means (4) for connecting said supporting structure (2)to the frame (5) of a bicycle (6), and
- adjustable support means (7) operatively associated with said supporting surface for arranging and locking at least said seat-back (3b) both in a first, substantially upright, operating setting and in at least one second reclined operating setting, characterized in that said adjustable support means (7) is such that when adjusted in order to set the inclination of said seat-back it correspondingly sets the position of said seating surface (3a) so as to keep the position of the centre of gravity of the overall load comprising the seat weight and the weight of a baby seated therein substantially unchanged in said operating setting.

2. A baby-seat according to claim 1, characterized in that said adjustable support means (7) is operatively interposed between said supporting structure (2) and attachment means (4).

3. A seat according to claim 2, characterized in that said seating surface (3a) and seat-back (3b) are integral with each other so as to form a substantially rigid unitary body (3), and in that said adjustable support means (7) is adapted to define a circular displacement path of said rigid seat body between said operating settings.

4. A baby-seat according to claim 3, characterized in that said circular displacement path of said rigid seat body has a centre of rotation (7a) disposed substantially close to the seat-back (3b) of said supporting structure (2).

5. A baby-seat according to claim 3, characterized in that said supporting structure (2) comprises a leg and foot rest portion (8) rotatably engaged with said first portion (3a) of said rigid seat body (3) and adapted to maintain the orientation of said rigid seat body unaltered.

6. A baby-seat according to claim 3, characterized in that said adjustable support means (7) comprises:
- at least one rigid base element (9) integral with said attachment means (4) and comprising one hinging end on which said seat-back is articulated and defining said centre of rotation (7a), and
- at least one rod-like element (10) of variable length, engaged at a first end portion (10a) thereof with said first portion (3a) of the supporting structure (2) and pivotally mounted, at a second end portion (10b) thereof, on a second hinging end of said rigid base element (9).

7. A baby-seat according to claim 6, characterized in that said rigid base element (9) has a substantially L-shaped conformation the shape of which matches that of the outer surface of said rigid seat body (3) at least partly.

8. A baby-seat according to claim 4, characterized in that said adjustable support means (7) comprises:
- at least one curved base guide (11) integral with said attachment means (4) and defining said circular displacement path of the rigid seat body (3), and
- at least one curved counter-guide (12) slidably engaged in said base guide and integral with said first portion of said supporting structure.

9. A baby-seat according to claim 1, characterized in that said seating surface (3a) and seat-back (3b) are in engagement with each other at a hinge element (21), said adjustable support means being defined by at least one slide (20) provided with a backward and forward movement and by said hinge element (21).

## Patentansprüche

1. Fahrradkindersitz nach der Art, umfassend:
- eine anatomisch ausgebildete Stützkonstruktion (2), die mindestens einen eine Sitzebene (3a) festlegenden ersten Abschnitt und einen eine Rückenlehne (3b) festliegenden, zweiten Abschnitt aufweist, und
- Anschlußmittel (4) zur Verbindung der Stützkonstruktion (2) an einem Rahmen (5) eines Fahrrades (6), und
- einstellbare Tragmittel (7), die der Stützebene wirksam zugeordnet sind, um mindestens die Rückenlehne (3b) sowohl in einer im wesentlichen aufrechten Benutzungsposition als auch in mindestens einer zweiten, geneigten Benutzungsposition anzuordnen und zu befestigen,
dadurch gekennzeichnet, daß die einstellbaren Tragmittel (7) derart sind, daß sie, nachdem sie zur Festlegung der Neigung der Rücklehne eingestellt sind, dementsprechend die Position der Sitzebene (3a) derart festlegen, daß in den Benutzungspositionen die Stellung des Schwerpunktes der das Gewicht des Sitzes und eines in ihm aufgenommenen Kindes umfassenden Last im wesentlichen unveränderbar gehalten wird.

2. Fahrradkindersitz nach Anspruch 1, dadurch gekennzeichnet, daß die einstellbaren Tragmittel zwischen der Stützkonstruktion (7) und den Anschlußmitteln (4) wirksam zwischengeschalten sind.

3. Fahrradkindersitz nach Anspruch 2, dadurch gekennzeichnet, daß die Sitzebene (3a) und die Rückenlehne (3b) derart zueinander festliegen, daß ein im wesentlichen starrer, einstückiger Körper (3) gebildet wird, und dadurch, daß die einstellbaren Tragmittel (7) eine kreisförmige Verstelllaufbahn des starren Sitzkörpers zwischen den Benutzungspositionen festlegen.

4. Fahrradkindersitz nach Anspruch 3, dadurch gekennzeichnet, daß die kreisförmige Versteillaufbahn des starren Sitzkörpers eine Drehmitte (7a) aufweist, die im wesentlichen in der Nähe der Rückenlehne (3b) der Stützkonstruktion (2) angeordnet ist.

5. Fahrradkindersitz nach Anspruch 3, dadurch gekennzeichnet, daß die Sitzkonstruktion (2) einen Bein- und Fußabstützabschnitt (8) umfaßt, der am ersten Abschnitt (3a) des starren Sitzkörpers (3) drehbar angreift und die Ausrichtung des starren Sitzkörpers unverändert beibehält.

6. Fahrradkindersitz nach Anspruch 3, dadurch gekennzeichnet, daß die einstellbaren Tragmittel (7) umfassen:
- mindestens ein an den Anschlußmitteln (4) festliegendes, starres Basiselement (9), das ein erstes Anlenkende umfaßt, an dem die Rückenlehne angelenkt ist und das die Drehmitte (7a) festlegt, und
- mindestens ein stangenförmiges Element (10) veränderbarer Länge, das im Bereich eines ersten Endteils (10a) am ersten Abschnitt (3a) der Stützkonstruktion (2) angreift und im Bereich eines zweiten Endteils (10b) an einem zweiten Anlenkende des starren Basiselementes (9) angelenkt ist.

7. Fahrradkindersitz nach Anspruch 6, dadurch gekennzeichnet, daß das starre Basiselement (9) eine im wesentlichen "L"-förmige Ausbildung besitzt, deren Form mindestens teilweise zu jener der Außenfläche des starren Sitzkörpers (3) gegenprofiliert ist.

8. Fahrradkindersitz nach Anspruch 4, dadurch gekennzeichnet, daß die einstellbaren Tragmittel (7) umfassen:
- mindestens eine gekrümmte Basisführung (11), die an den Anschlußmitteln (4) festliegt und die kreisförmige Verstelllaufbahn des starren Sitzkörpers (3) festlegt, und
- mindestens eine gekrümmte Gegenführung (12), die gleitbar in der Basisführung in Eingriff steht und am ersten Abschnitt der Stützkonstruktion festliegt.

9. Fahrradkindersitz nach Anspruch 1, dadurch gekennzeichnet, daß die Sitzebene (3a) und die Rückenlehne (3b) im Bereich eines Scharnierelementes (21) miteinander in Eingriff stehen, wobei die einstellbaren Tragelemente durch mindestens einen hin- und herbeweglichen Schlitten (20) und durch das Scharnierelement (21) festgelegt sind.

## Revendications

1. Siège de bébé pour bicyclette, du type comprenant:
- une structure de support (2) de forme anatomique ayant au moins une première portion définissant une surface formant assise (3a) et une deuxième portion définissant un dossier (3b), et
- des moyens de fixation (4) pour relier ladite structure de support (2) au cadre (5) d'une bicyclette (6), et
- des moyens de support réglables (7) associés de manière opérationnelle à ladite surface de support pour disposer et bloquer au moins ledit dossier (3b) soit dans une première position fonctionnelle de réglage, essentiellement droite, soit dans au moins une deuxième position fonctionnelle de réglage inclinée,
caractérisé en ce que lesdits moyens de support réglables sont agencés de telle sorte que, quand réglés en vue de fixer l'inclinaison dudit dossier, ils fixent d'une façon correspondante la position de ladite surface formant assise (3a), de manière à maintenir sensiblement inchangée dans ladite position fonctionnelle de réglage la position du centre de gravité de la charge globale comprenant le poids du siège et le poids du bébé y assis.

2. Siège de bébé selon la revendication 1, caractérisé en ce que lesdits moyens de support réglables (7) sont interposés de manière opérationnelle entre ladite structure de support (2) et lesdits moyens de fixation (4).

3. Siège selon la revendication 2, caractérisé en ce que ladite surface formant assise (3a) et ledit dossier (3b) sont solidaires l'une de l'autre, de manière à former un corps unitaire sensiblement rigide (3), et en ce que lesdits moyens de support réglables (7) sont adaptés à définir une trajectoire circulaire de déplacement dudit corps rigide de siège entre lesdites positions fonctionnelles de réglage.

4. Siège de bébé selon la revendication 3, caractérisé en ce que ladite trajectoire circulaire de déplacement dudit corps rigide de siège a un centre de rotation (7a) disposé sensiblement à proximité du dossier (3a) de ladite structure de support (2).

5. Siège de bébé selon la revendication 3, caractérisé en ce que ladite structure de support (2) comporte une portion repose-jambe et repose-pied (8) engagée à rotation à ladite première portion (3a) dudit corps rigide de siège (3) et adaptée à maintenir inchangée l'orientation dudit corps rigide de siège.

6. Siège de bébé selon la revendication 3, caractérisé en ce que lesdits moyens de support réglables (7) comportent:
- au moins un élément rigide de base (9) solidaire desdits moyens de fixation (4) et comprenant une première extrémité d'articulation sur laquelle est articulé ledit dossier et définissant ledit centre de rotation (7a), et
- au moins un élément en forme de tige (10) de longueur variable, engagé, en correspondance d'une première portion d'extrémité (10a), à ladite première portion (3a) de la structure de support (2) et monté à pivotement, en correspondance d'une seconde portion d'extrémité (10b), sur une seconde extrémité d'articulation dudit élément rigide de base (9).

7. Siège de bébé selon la revendication 6, caractérisé en ce que ledit élément rigide de base (9) a essentiellement une conformation en "L" dont la forme épouse au moins partiellement celle de la surface extérieure dudit corps rigide de siège (3).

8. Siège de bébé selon la revendication 4, caractérisé en ce que lesdits moyens de support réglables (7) comportent:
- au moins un guidage de base courbe (11) solidaire desdits moyens de fixation (4) et définissant ladite trajectoire circulaire de déplacement du corps rigide de siège (3), et
- au moins un contre-guidage courbe (12) engagé de manière coulissante dans ledit guidage de base et solidaire de ladite première portion de ladite structure de support.

9. Siège de bébé selon la revendication 1, caractérisé en ce que ladite surface formant assise (3a) et ledit siège (3b) sont en engagement réciproque en correspondance d'un élément d'articulation (21), lesdits moyens de support réglables étant définis par au moins un chariot (20) pourvu d'un mouvement en va-et-vient et par ledit élément d'articulation (21).
